# DEMANDE DE BREVET EUROPEEN

(11) **EP 4 391 129 A1**
(43) Date de publication de la demande: **26.06.2024**
(21) Numéro de dépôt: 22307038.4
(22) Date de dépôt: 23.12.2022
(51) Int. Cl.: H01M 10/04, B60L 50/64, H01M 10/625, H01M 50/209

(54) **ENSEMBLE POUR BATTERIE COMPRENANT UNE OU PLUSIEURS CELLULE(S) ÉLECTROCHIMIQUE(S) ET PROCÉDÉ DE MONTAGE D'UN TEL ENSEMBLE**

(71) Demandeur: Automotive Cells Company SE, 92300 Levallois Perret (FR)
(72) Inventeur: MATHIEU, Alexandre, Pierre, Maurice, 33300 BORDEAUX (FR); BAYLAC, Johan, 33800 BORDEAUX (FR); de ROLAND, Geoffroy, Yves, Gérard, 33520 BRUGES (FR); BRIEN, Patrick, 33290 PAREMPUYRE (FR); QUEYRENS, Mathieu, 33910 SAINT-DENIS-DE-PILE (FR)
(74) Mandataire: Lavoix

(57) **Abrégé**

Un ensemble (10) pour batterie comprend :
- un support (12) comprenant une première butée (14), une deuxième butée (16) et une troisième butée (17),
- un groupe comprenant une ou plusieurs cellule(s) électrochimique(s), et
- un système de compression (20) comprenant un premier élément (50) ayant une première surface (60) inclinée, et un deuxième élément (52) ayant une deuxième surface inclinée (66) et en contact plan avec la première surface inclinée (60).

Le premier élément (50) est destiné à être déplacé vers la troisième butée (17) entre une position initiale et une position finale, dans laquelle la première surface inclinée (60) appuie sur la deuxième surface inclinée (66) et le deuxième élément (52) bute contre la troisième butée (17) de sorte que le deuxième élément (52) exerce une pression longitudinale sur le groupe.

## Description

La présente invention concerne un ensemble pour batterie comprenant une ou plusieurs cellule(s) électrochimique(s), la batterie étant par destinée à alimenter un véhicule électrique ou hybride.

On entend par « batterie » une pluralité de cellules électrochimiques reliées électriquement les unes aux autres. Selon un exemple particulier de batterie, la pluralité de cellules électrochimiques est agencée sous la forme d'un ou plusieurs ensemble(s), chaque ensemble comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres et un empilement d'électrodes négatives reliées les unes aux autres, séparées par un séparateur, connu sous le terme de « stack ». Les électrodes positives reliées les unes aux autres forment une borne positive, et les électrodes négatives reliées les unes aux autres forment une borne négative.

Il est connu d'assembler, en série et/ou en parallèle, une pluralité de cellules électrochimiques afin de réaliser des modules ou des batteries électriques, à l'aide d'un dispositif d'interconnexion assurant un contact électrique entre les bornes de deux cellules électrochimiques voisines.

Afin d'assembler mécaniquement les cellules électrochimiques reliées électriquement, il est connu de les aligner sur un support plan ou un rail et de les maintenir aux deux extrémités compressées par des plaques parallèles fixes, un tel assemblage étant désigné sous le terme « module ».

Cependant, cet assemblage ne permet pas d'extraire individuellement une cellule sans démonter une partie importante dudit assemblage.

La présente invention a pour but de permettre la réalisation de batterie avec un assemblage mécanique simplifié des cellules électrochimiques, ainsi qu'un démontage individuel facilité desdites cellules.

A cet effet, l'invention a pour objet un ensemble pour batterie comprenant :
- un support comprenant une première butée et une deuxième butée espacées l'une de l'autre selon une direction longitudinale, le support comprenant une troisième butée,
- un groupe comprenant une ou plusieurs cellule(s) électrochimique(s), le groupe étant située longitudinalement entre la première butée et la deuxième butée, et
- au moins un système de compression adapté pour exercer une pression longitudinale sur le groupe et situé longitudinalement entre la première butée et le groupe.

Le système de compression comprend :
- un premier élément ayant une première surface inclinée par rapport à une direction transversale perpendiculaire à la direction longitudinale, et
- un deuxième élément ayant une deuxième surface inclinée par rapport à la direction transversale et en contact plan avec la première surface inclinée du premier élément.

Le premier élément est apte et destiné à être déplacé par rapport au support selon la direction transversale vers la troisième butée entre une position initiale et une position finale, dans laquelle la première surface inclinée du premier élément appuie sur la deuxième surface inclinée du deuxième élément et le deuxième élément bute transversalement contre la troisième butée de sorte que le deuxième élément exerce une pression longitudinale sur le groupe.

Selon des modes particuliers de réalisation, l'ensemble comprend l'une ou plusieurs des caractéristiques optionnelles suivantes, prise(s) isolément ou selon toutes les combinaisons techniquement possibles :
- le système de compression comprend un organe adapté pour déplacer le premier élément entre sa position initiale et sa position finale ;
- la première surface inclinée définit un angle avec la direction transversale, l'angle étant compris entre 10° et 60° ;
- le groupe comprend une plaque mobile située longitudinalement entre le système de compression et la ou les cellule(s) électrochimique(s) ;
- le support comprend un fond et une plaque finale s'étendant perpendiculairement à la direction longitudinale et formant la deuxième butée ;
- le premier élément et le deuxième élément sont situés transversalement entre le fond et la troisième butée, le deuxième élément étant situé transversalement entre le premier élément et la troisième butée ;
- le support comprend une coque définissant un logement dans lequel est reçu le système de compression ;
- chaque coque comprend une première paroi s'étendant perpendiculairement à la direction longitudinale et une deuxième paroi perpendiculaire à la première paroi, la première paroi formant la première butée et la deuxième paroi formant la troisième butée ; et
- l'ensemble comprend plusieurs systèmes de compression répartis selon une troisième direction perpendiculaire à la direction transversale et à la direction longitudinale.

L'invention a aussi pour objet un procédé de montage de l'ensemble tel que décrit précédemment, le procédé comprenant au moins les étapes suivantes :
a) fourniture de l'ensemble,
b) déplacement du premier élément de la position initiale à la position finale, la première surface inclinée du premier élément appuyant sur la deuxième surface inclinée du deuxième élément et le deuxième élément butant transversalement contre la troisième butée de sorte que le deuxième élément exerce une pression longitudinale sur le groupe.

L'invention sera mieux comprise à la lecture de la description qui va suivre, donnée uniquement à titre d'exemple non limitatif, et faite en se référant aux dessins annexés, sur lesquels :
- la figure 1 est une vue schématique en perspective d'un ensemble selon l'invention, et
- la figure 2 est une vue en coupe selon un plan de coupe XY de l'ensemble représenté sur la figure 1, le premier élément du système de compression étant dans la position initiale.

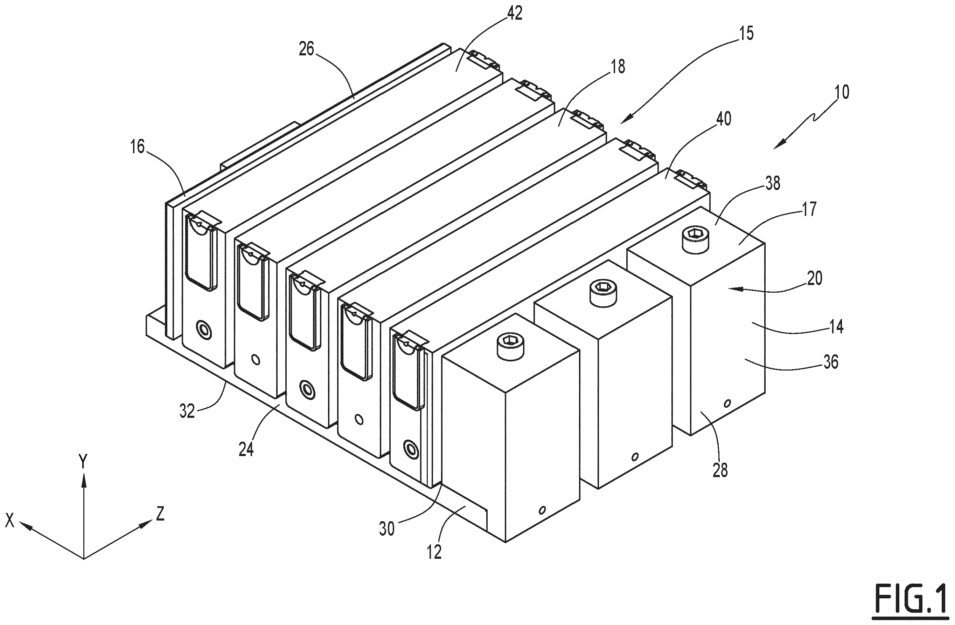

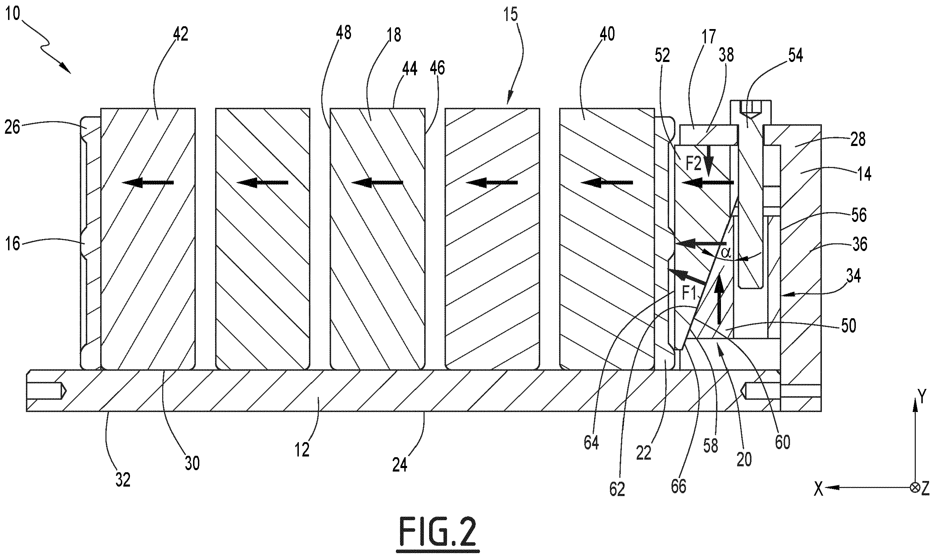

En référence aux figures 1 et 2, on décrit un ensemble 10 pour batterie selon l'invention.

L'ensemble 10 est destiné à la formation d'une batterie, par exemple destinée à alimenter un véhicule automobile électrique ou hybride (non représenté).

L'ensemble 10 comprend un support 12 formant une première butée 14, une deuxième butée 16 et une troisième butée 17, la première butée 14 et la deuxième butée 16 étant espacées l'une de l'autre selon une direction longitudinale X de l'ensemble 10.

La direction longitudinale X correspond par exemple la direction transversale du véhicule.

On définit, en outre, une direction transversale Y perpendiculaire à la direction longitudinale X et qui est par exemple destinée à être sensiblement verticale lorsque le véhicule se situe sur une surface horizontale (non représentée).

Par ailleurs, on définit une troisième direction Z perpendiculaire à la direction longitudinale X et à la direction transversale Y, et qui est par exemple la direction d'avancée du véhicule.

L'ensemble 10 comprend, en outre, un groupe 15 comprenant plusieurs cellules électrochimiques 18, le groupe 15 étant situé longitudinalement entre la première butée 14 et la deuxième butée 16.

L'ensemble 10 comprend, par ailleurs, plusieurs systèmes de compression 20 adaptés pour exercer une pression longitudinale sur le groupe 15 en plusieurs points répartis selon la troisième direction Z.

Dans l'exemple illustré sur la figure 1, l'ensemble 10 comprend trois systèmes de compression 20 espacés régulièrement selon la troisième direction Z.

Selon une variante non représentée, l'ensemble 10 comprend un seul système de compression 20 adapté pour exercer une pression longitudinale sur le groupe 15.

Le support 12 comprend par exemple un fond 24, une plaque finale 26 et au moins une coque 28, et de préférence une coque 28 pour chacun des systèmes de compression 20.

Plus particulièrement, le fond 24 est sensiblement plan et comporte une première face 30 et une deuxième face 32 opposée à la première face 30. Le fond 24 s'étend perpendiculairement à la direction transversale Y, la première face 30 étant par exemple orientée vers le haut.

La plaque finale 26 s'étend perpendiculairement à la direction longitudinale X, et plus particulièrement, en saillie vers le haut de la première face 30 du fond 24.

La plaque finale 26 est de préférence fixée sur le fond 24, et est par exemple venue de matière avec le fond 24 ou est collée sur première face 30.

Dans l'exemple, la plaque finale 26 forme la deuxième butée 16.

Chaque coque 28 est opposée longitudinalement à la plaque finale 26.

Chaque coque 28 définit, de préférence, un logement 34, dans lequel est reçu au moins un des systèmes de compression 20.

Par ailleurs, chaque coque 28 comprend, de préférence, une première paroi 36 s'étendant perpendiculairement à la direction longitudinale X et une deuxième paroi 38 perpendiculaire à la première paroi 36.

Le logement 34 est par exemple délimité longitudinalement par la première paroi 36 et transversalement par la deuxième paroi 38.

La première paroi 36 est de préférence fixée sur le fond 24, par exemple par au moins une vis de fixation.

Dans l'exemple, la première paroi 36 forme la première butée 14 opposée longitudinalement à la deuxième butée 16 formée par la plaque finale 26.

La deuxième paroi 38 s'étend longitudinalement en saillie de la première paroi 36, et plus particulièrement en direction de la plaque finale 26.

Comme illustré sur la figure 2, la deuxième paroi 38 s'étend en regard de la première face 30 du fond 24, le logement 34 s'étendant transversalement entre la première face 30 du fond 24 et la deuxième paroi 38.

Dans l'exemple, la deuxième paroi 38 forme la troisième butée 17.

La deuxième paroi 38 est avantageusement rigide, et de préférence sensiblement indéformable dans des conditions normales d'utilisation. La deuxième paroi 38 est par exemple en métal, tel que de l'acier ou de l'aluminium.

Dans l'exemple illustré sur les figures 1 et 2, le groupe 15 comprend cinq cellules électrochimiques 18 s'étendant successivement selon la direction longitudinale X entre la première butée 14 et la deuxième butée 16.

Selon une variante non représentée, le groupe 15 comprend qu'une seule cellule électrochimique 18.

De manière avantageuse, le groupe 15 comprend, en outre, une plaque mobile 22 située longitudinalement entre les systèmes de compression 20 et les cellules électrochimiques 18.

Les cellules électrochimiques 18 sont avantageusement analogues les unes des autres.

Chaque cellule électrochimique 18 est, de préférence, disposée sur la première face 30 du fond 24 du support 12, et est, avantageusement apte à glisser sur la première face 30 du fond 24.

Dans l'exemple, les cellules électrochimiques 18 sont situées longitudinalement entre la coque 28 et la plaque finale 26.

On définit ainsi une première cellule d'extrémité 40 située longitudinalement entre la coque 28 et les autres cellules électrochimiques 18 et une deuxième cellule d'extrémité 42 située longitudinalement entre les autres cellules électrochimiques 18 et la plaque finale 26.

Chaque cellule électrochimique 18 comprend une enveloppe externe 44 comprenant une première face latérale 46 et une deuxième face latérale 48 opposées longitudinalement l'une à l'autre.

Dans l'exemple, la première face latérale 46 de la première cellule d'extrémité 40 s'étend en regard de la coque 28, et par exemple contre la plaque mobile 22. La deuxième face latérale 48 de la deuxième cellule d'extrémité 42 s'étend contre la plaque finale 26.

La plaque mobile 22 s'étend de préférence perpendiculairement à la direction longitudinale X, et est par exemple disposée sur la première face 30 du fond 24.

La plaque mobile 22 est avantageusement apte à glisser sur la première face 30 du fond 24.

Dans l'exemple, la plaque mobile 22 s'étend entre la coque 28 et les cellules électrochimiques 18.

Les systèmes de compression 20 sont avantageusement analogues les uns des autres.

Chaque système de compression 20 est situé longitudinalement entre la première butée 14 et le groupe 15, et plus précisément entre la première butée 14 et la plaque mobile 22.

Par exemple, chaque système de compression 20 est reçu dans le logement 34 défini dans la coque 28.

Chaque système de compression 20 comprend un premier élément 50 et un deuxième élément 52, le premier élément 50 étant apte et destiné à être déplacé par rapport au support 12 selon la direction transversale Y vers la troisième butée 17 entre une position initiale (figure 2) et une position finale (non représentée).

Par un déplacement selon la direction transversale Y, on entend par exemple une translation du premier élément 50 selon une direction de translation sensiblement parallèle à la direction transversale Y, c'est-à-dire incliné par rapport à la direction transversale Y d'un angle compris entre 0° et 45°.

Ainsi, la position finale (non représentée) se déduit facilement de la position initiale par une translation dans l'exemple.

Avantageusement, chaque système de compression 20 comprend, en outre, un organe 54 adapté pour déplacer le premier élément 50 entre sa position initiale et sa position finale.

Dans l'exemple, le premier élément 50 et le deuxième élément 52 sont situés transversalement entre le fond 24 et la troisième butée 17, le deuxième élément 52 étant situé transversalement entre le premier élément 50 et la troisième butée 17.

Le premier élément 50 comprend une première face latérale 56 et une deuxième face latérale 58 opposées longitudinalement l'une à l'autre.

Le premier élément 50 comprend une première surface 60 inclinée par rapport la direction transversale Y, et par exemple définie sur la deuxième face latérale 58.

Le premier élément 50 est avantageusement rigide, et de préférence sensiblement indéformable dans des conditions normales d'utilisation.

Par exemple, la première face latérale 56 s'étend contre la première butée 14, et avantageusement contre la première paroi 36 de la coque 28.

La première surface inclinée 60 définit un angle α avec la direction transversale Y, l'angle α étant par exemple compris entre 10° et 60°.

On définit l'angle α comme l'angle aigu formé entre la première surface 60 inclinée et la direction transversale Y.

Comme visible sur la figure 2, la première surface inclinée 60 est inclinée de sorte que la largeur du premier élément 50 décroit selon la direction transversale Y.

Le deuxième élément 52 comprend une première face latérale 62 et une deuxième face latérale 64 opposées longitudinalement l'une à l'autre.

Le deuxième élément 52 comprend une deuxième surface 66 inclinée par rapport la direction transversale Y, et par exemple définie sur la première face latérale 62 du deuxième élément 52.

Le deuxième élément 52 est avantageusement rigide, et de préférence sensiblement indéformable dans des conditions normales d'utilisation.

Par exemple, la deuxième face latérale 64 s'étend en regard du groupe 15, et de préférence contre la plaque mobile 22.

La première face latérale 62 s'étend contre la deuxième face latérale 58 du premier élément 50.

Par exemple, la deuxième surface 66 inclinée du deuxième élément 52 s'étend en contact plan avec la première surface 60 inclinée du premier élément 50.

Dans la position initiale du premier élément 50, le deuxième élément 52 est maintenu en position entre la troisième butée 17 et le premier élément 50.

Dans la position finale, la première surface 60 inclinée du premier élément 50 appuie sur la deuxième surface 66 inclinée du deuxième élément 52 et le deuxième élément 52 bute transversalement contre la troisième butée 17 de sorte que le deuxième élément 52 tend à s'échapper vers le groupe 15 en exerçant une pression longitudinale sur le groupe 15.

Dans l'exemple, la position initiale du premier élément 50 est une position basse et la position finale du premier élément 50 est une position haute.

L'organe 54 est par exemple une vis de serrage configurée de sorte que son vissage ou dévissage déplace transversalement le premier élément 50, notamment dans le logement 34 défini dans la coque 28 en direction de la troisième butée 17.

Par exemple, l'organe 54 s'étend transversalement et est logé dans le premier élément 50 et dans la deuxième paroi 38 de la coque 28.

Un procédé de montage de l'ensemble 10 selon l'invention va maintenant être décrit.

Un ensemble 10 tel que décrit précédemment est tout d'abord fourni, le premier élément 50 étant en position initiale comme illustré sur la Figure 2.

Le premier élément 50 est ensuite déplacé de la position initiale à la position finale.

Dans la position finale, la première surface 60 inclinée du premier élément 50 appuie sur la deuxième surface 66 inclinée du deuxième élément 52 et le deuxième élément 52 bute transversalement contre la troisième butée 17 de sorte que le deuxième élément 52 exerce une pression longitudinale sur le groupe 15, et de préférence sur la plaque mobile 22.

Avantageusement, lors du déplacement du premier élément 50 de la position initiale à la position finale, le deuxième élément 52 est poussé transversalement selon une force F1 par le premier élément 50 en direction de la troisième butée 17 contre laquelle le deuxième élément 52 bute. La troisième butée 17 exerce ainsi une force transversale F2 sur le deuxième élément 52.

Guidé par l'inclinaison du contact plan entre les surfaces inclinées 60, 66, le deuxième élément 52 est ainsi poussé longitudinalement et est déplacé selon la direction longitudinale X vers le groupe 15, et de préférence vers la plaque mobile 22.

Le deuxième élément 52 exerce donc une pression longitudinale F3 sur la plaque mobile 22, ce qui entraine son glissement longitudinal sur le fond 24.

La pression longitudinale F3 exercée par le deuxième élément 52 sur la plaque mobile 22 est par exemple comprise entre 1 bar et 20 bar.

La plaque mobile 22 pousse ensuite transversalement les cellules électrochimiques 18 en direction de la deuxième butée 16.

Plus particulièrement, la plaque mobile 22 pousse la première face latérale 46 de la première cellule d'extrémité 40, qui glisse longitudinalement direction de la deuxième butée 16.

La deuxième face latérale 48 de la première cellule d'extrémité 40 exerce ensuite une pression sur la première face latérale 46 des autres cellules 18, qui pousse ensuite la deuxième cellule d'extrémité 42 jusqu'à ce que celle-ci vienne buter contre la deuxième butée 16.

Dans la position finale du premier élément 50, les cellules électrochimiques 18 sont compressées contre la deuxième butée 16 et sont ainsi maintenues en position entre la plaque mobile 22 et la deuxième butée 16.

Grâce aux caractéristiques décrites ci-dessus, l'ensemble 10 est facile à monter et permet ainsi un assemblage mécanique simplifié des cellules électrochimiques 18 pour former une batterie.

En outre, un tel ensemble 10 permet un démontage individuel facilité des cellules électrochimiques 18.

En effet, en déplaçant le premier élément 50 de la position finale à la position initiale, les cellules électrochimiques 18 ne sont plus compressées contre la deuxième butée 16. Il est alors possible d'enlever une des cellules électrochimiques 18 indépendamment des autres.

Par ailleurs, le fait que la compression des cellules électrochimiques 18 soit obtenue par un déplacement transversal du premier élément 50 permet un arrangement longitudinal compact du système de compression 20. Ceci permet un gain de volume et donc une augmentation de la densité énergétique de la batterie intégrant l'ensemble 10.

En outre, le mode de réalisation de l'invention illustré sur les figures 1 et 2, avec la plaque mobile 22 et une pluralité de systèmes de compression 20, est particulièrement avantageux, car la pression longitudinale exercée par les systèmes de compression 20 est répartie sur toute l'extension des cellules électrochimiques 18 dans la troisième direction X, et non en un seul point, ce qui peut présenter un risque d'endommagement des cellules électrochimiques 18.

Dans un mode de réalisation de l'invention non-illustré, la troisième butée 17 est formée par le fond 24 du support 12, le premier élément 50 étant situé au-dessus du deuxième élément 52. Le premier élément 50 est ainsi déplacé transversalement vers le fond 24 entre la position initiale, qui est une position haute, et la position finale, qui est une position basse.

## Revendications

1. Ensemble (10) pour batterie comprenant :
- un support (12) comprenant une première butée (14) et une deuxième butée (16) espacées l'une de l'autre selon une direction longitudinale (X), le support (12) comprenant une troisième butée (17),
- un groupe (15) comprenant une ou plusieurs cellule(s) électrochimique(s) (18), le groupe (15) étant située longitudinalement entre la première butée (14) et la deuxième butée (16), et
- au moins un système de compression (20) adapté pour exercer une pression longitudinale sur le groupe (15) et situé longitudinalement entre la première butée (14) et le groupe (15),
**caractérisé en ce que** le système de compression (20) comprend :
- un premier élément (50) ayant une première surface (60) inclinée par rapport à une direction transversale (Y) perpendiculaire à la direction longitudinale (X), et
- un deuxième élément (52) ayant une deuxième surface inclinée (66) par rapport à la direction transversale (Y) et en contact plan avec la première surface inclinée (60) du premier élément (50),
le premier élément (50) étant apte et destiné à être déplacé par rapport au support (12) selon la direction transversale (Y) vers la troisième butée (17) entre une position initiale et une position finale, dans laquelle la première surface inclinée (60) du premier élément (50) appuie sur la deuxième surface inclinée (66) du deuxième élément (52) et le deuxième élément (52) bute transversalement contre la troisième butée (17) de sorte que le deuxième élément (52) exerce une pression longitudinale sur le groupe (15).

2. Ensemble (10) selon la revendication 1, dans lequel le système de compression (20) comprend un organe (54) adapté pour déplacer le premier élément (50) entre sa position initiale et sa position finale.

3. Ensemble (10) selon la revendication 1 ou 2, dans lequel la première surface inclinée (60) définit un angle (α) avec la direction transversale (Y), l'angle (α) étant compris entre 10° et 60°.

4. Ensemble (10) selon l'une quelconque des revendications précédentes, dans lequel le groupe (15) comprend une plaque mobile (22) située longitudinalement entre le système de compression (20) et la ou les cellule(s) électrochimique(s) (18).

5. Ensemble (10) selon l'une quelconque des revendications précédentes, dans lequel le support (12) comprend un fond (24) et une plaque finale (26) s'étendant perpendiculairement à la direction longitudinale (X) et formant la deuxième butée (16).

6. Ensemble (10) selon la revendication 5, dans lequel le premier élément (50) et le deuxième élément (52) sont situés transversalement entre le fond (24) et la troisième butée (17), le deuxième élément (52) étant situé transversalement entre le premier élément (50) et la troisième butée (17).

7. Ensemble (10) selon l'une quelconque des revendications précédentes, dans lequel le support (12) comprend une coque (28) définissant un logement (34) dans lequel est reçu le système de compression (20).

8. Ensemble (10) selon la revendication 7, dans lequel chaque coque (28) comprend une première paroi (36) s'étendant perpendiculairement à la direction longitudinale (X) et une deuxième paroi (38) perpendiculaire à la première paroi (36), la première paroi (36) formant la première butée (14) et la deuxième paroi (38) formant la troisième butée (17).

9. Ensemble (10) selon l'une quelconque des revendications précédentes, comprenant plusieurs systèmes de compression (20) répartis selon une troisième direction (Z) perpendiculaire à la direction transversale (Y) et à la direction longitudinale (X).

10. Procédé de montage d'un ensemble (10) selon l'une quelconque des revendications précédentes, le procédé comprenant les étapes suivantes :
a) fourniture de l'ensemble (10),
b) déplacement du premier élément (50) de la position initiale à la position finale, la première surface inclinée (60) du premier élément (50) appuyant sur la deuxième surface inclinée (66) du deuxième élément (52) et le deuxième élément (52) butant transversalement contre la troisième butée (17) de sorte que le deuxième élément (52) exerce une pression longitudinale sur le groupe (15).

## Revendications modifiées

### Revendications modifiées conformément à la règle 137(2) CBE.

1. Ensemble (10) pour batterie comprenant :
- un support (12) comprenant une première butée (14) et une deuxième butée (16) espacées l'une de l'autre selon une direction longitudinale (X), le support (12) comprenant une troisième butée (17),
- un groupe (15) comprenant une ou plusieurs cellule(s) électrochimique(s) (18), le groupe (15) étant située longitudinalement entre la première butée (14) et la deuxième butée (16), et
- au moins un système de compression (20) adapté pour exercer une pression longitudinale sur le groupe (15) et situé longitudinalement entre la première butée (14) et le groupe (15),
**caractérisé en ce que** le système de compression (20) comprend :
- un premier élément (50) ayant une première surface (60) inclinée par rapport à une direction transversale (Y) perpendiculaire à la direction longitudinale (X), et
- un deuxième élément (52) ayant une deuxième surface inclinée (66) par rapport à la direction transversale (Y) et en contact plan avec la première surface inclinée (60) du premier élément (50),
le premier élément (50) étant apte et destiné à être déplacé par rapport au support (12) selon la direction transversale (Y) vers la troisième butée (17) entre une position initiale et une position finale, dans laquelle la première surface inclinée (60) du premier élément (50) appuie sur la deuxième surface inclinée (66) du deuxième élément (52) et le deuxième élément (52) bute transversalement contre la troisième butée (17) de sorte que le deuxième élément (52) exerce une pression longitudinale sur le groupe (15),
le groupe (15) comprenant une plaque mobile (22) située longitudinalement entre le système de compression (20) et la ou les cellule(s) électrochimique(s) (18).

2. Ensemble (10) selon la revendication 1, dans lequel le système de compression (20) comprend un organe (54) adapté pour déplacer le premier élément (50) entre sa position initiale et sa position finale.

3. Ensemble (10) selon la revendication 1 ou 2, dans lequel la première surface inclinée (60) définit un angle (α) avec la direction transversale (Y), l'angle (α) étant compris entre 10° et 60°.

4. Ensemble (10) selon l'une quelconque des revendications précédentes, dans lequel le support (12) comprend un fond (24) et une plaque finale (26) s'étendant perpendiculairement à la direction longitudinale (X) et formant la deuxième butée (16).

5. Ensemble (10) selon la revendication 4, dans lequel le premier élément (50) et le deuxième élément (52) sont situés transversalement entre le fond (24) et la troisième butée (17), le deuxième élément (52) étant situé transversalement entre le premier élément (50) et la troisième butée (17).

6. Ensemble (10) selon l'une quelconque des revendications précédentes, dans lequel le support (12) comprend une coque (28) définissant un logement (34) dans lequel est reçu le système de compression (20).

7. Ensemble (10) selon la revendication 6, dans lequel chaque coque (28) comprend une première paroi (36) s'étendant perpendiculairement à la direction longitudinale (X) et une deuxième paroi (38) perpendiculaire à la première paroi (36), la première paroi (36) formant la première butée (14) et la deuxième paroi (38) formant la troisième butée (17).

8. Ensemble (10) selon l'une quelconque des revendications précédentes, comprenant plusieurs systèmes de compression (20) répartis selon une troisième direction (Z) perpendiculaire à la direction transversale (Y) et à la direction longitudinale (X).

9. Procédé de montage d'un ensemble (10) selon l'une quelconque des revendications précédentes, le procédé comprenant les étapes suivantes :
a) fourniture de l'ensemble (10),
b) déplacement du premier élément (50) de la position initiale à la position finale, la première surface inclinée (60) du premier élément (50) appuyant sur la deuxième surface inclinée (66) du deuxième élément (52) et le deuxième élément (52) butant transversalement contre la troisième butée (17) de sorte que le deuxième élément (52) exerce une pression longitudinale sur le groupe (15).
